# EUROPÄISCHE PATENTSCHRIFT

(11) **EP 0 269 026 B1**
(45) Veröffentlichungstag und Bekanntmachung des Hinweises auf die Patenterteilung: **02.06.1993**
(21) Anmeldenummer: 87117169.0
(22) Anmeldetag: 20.11.1987
(51) Int. Cl.: G01C 15/00

(54) **Sensorgesteuertes Nivelliergerät**
Sensor-controlled levelling device
Dispositif de nivellement commandé par un capteur

(30) Priorität: 21.11.1986 DE 3639770
(43) Veröffentlichungstag der Anmeldung: 01.06.1988
(73) Patentinhaber: Pertl, Peter, D-83022 Rosenheim (DE)
(72) Erfinder: Pertl, Peter, D-8200 Rosenheim (DE); Knauss, Uwe, D-8210 Prien am Chiemsee (DE)
(74) Vertreter: Flach, Dieter Rolf Paul, Dipl.-Phys.

(56) Entgegenhaltungen:
- US-A- 3 242 340
- US-A- 3 887 012
- US-A- 4 200 787

## Beschreibung

Die Erfindung betrifft ein sensorgesteuertes Nivelliergerät nach dem Oberbegriff des Anspruches 1.

Auf vielen technischen Gebieten kommt einer exakten Messung bzw. Justierung einer Horizontal- oder einer Winkelausrichtung große Bedeutung zu.

Besondere Bedeutung haben entsprechende Geräte nicht nur zur Messung beispielsweise einer Horizontal- oder Winkeleinstellung, sondern zur Durchführung einer automatischen Nachführung eines entsprechenden Bearbeitungsgerätes, beispielsweise auch einer Baumaschine, die z. B. eine Bodenfläche in möglichst exakter Horizontalausrichtung einebnen soll.

Insoweit sind bereits auch Laser zur Steuerung von Baumaschinen eingesetzt worden, wobei über den Laser eine Referenzfläche erzeugt wird. An einem Bodenbearbeitungsgerät wird der Lasersensor montiert. Über den Lasersensor kann eine Hydraulik des Bodenbearbeitungsgerätes so angesteuert werden, daß die Mitte des Empfängers immer dem Laserstrahl folgt.

Wandert der Lasersensor und damit auch das Bodenbearbeitungsgerät nach oben hin aus, so kann dies über den Lasersensor festgestellt und das Bodenbearbeitungsgerät mit dem darauf montierten Laserempfänger wieder so nach unten gegengesteuert werden, daß der Laserempfänger wieder die durch den Laserstrahler definierte Referenzfläche exakt in dessen Mittellage empfängt. Die bisher bekannt gewordenen Lasersensoren sind aber nicht nur enorm teuer, sondern weisen vor allem den Nachteil auf, daß mit ihnen nur mit großen Fehlerschwankungen eine ständige Ausrichtung des Lasersensors bezüglich der durch den Laserstrahl definierten Referenzebene erzielbar ist.

Eine entsprechende Sensoreinrichtung ist beispielsweise aus der US-PS 3,242,340 bekannt geworden. Die Sensor-Einrichtung ist nach Art einer längs der Äquatorebene geteilten Diskusform ausgebildet, wobei über den geringfügigen Abstandsspalt zwischen einer oberen und unteren Lasergehäuse-Öffnung der Laserstrahl bis ins Zentrum einfallen kann. Im Zentrum ist ein spiegelnder Doppelkonus angeordnet, wobei sich der Kegelstumpf von der Äquatorebene einmal nach oben und einmal nach unten hin verjüngt und an der Basisfläche miteinander verbunden ist. Ein radial einfallender Lichtstrahl wird über den Konus nach oben bzw. unten an der Konus-Oberfläche reflektiert, um dann in ein entsprechendes Detektorelement zu fallen und ausgewertet zu werden.

Die Anordnung ist aber auf Baufahrzeugen in keinster Weise anbaubar, da bereits bei geringfügigsten Vibrationen oder winkeligen Verstellungen ein Laserstrahl nicht mehr bis ins Innere des Umlenk-Konus fallen kann.

Ein weiteres sensorgesteuertes Nivelliergerät ist beispielsweise auch aus der US-PS 887 012 bekannt geworden. Dieses sensorgesteuerte Nivelliergerät kann auf einer Bodenbearbeitungsmaschine angebaut werden. Der Lasersensor weist einen mehrere Stockwerke oder Scheiben umfassenden Aufbau auf, wobei in jeder Scheibe ein um 1200 in Umlaufrichtung versetzt ausgerichtete Detektorelement angeordnet ist. Bei einer relativen Höhenlagenverstellung wird der zu empfangende Laserdetektor in unterschiedlichen "Stockwerken" dieses Turmaufbaues einfallen, worüber eine Gegensteuerung ausgelöst werden kann.

Die Auflösung und Genauigkeit einer derartigen Sensoreinrichtung ist aber nur sehr gering.

Demgegenüber ist es Aufgabe der vorliegenden Erfindung, ein sensorgesteuertes Nivelliergerät insbesondere für Baumaschinen zu schaffen, mit den Abweichungen gegenüber einer gewünschten Relativlage genauer feststellbar und darüber die Stellmotoren zum Gegenregeln ansteuerbar sind.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Der erfindungsgemäße Lasersensor zeichnet sich durch eine äußerst hohe Exaktheit aus, und dies bei minimalem Bauaufwand und damit gegenüber dem Stand der Technik extrem niedrigen Herstellkosten. Dies läßt sich erfindungsgemäß durch die Verwendung zweier aufeinander zu weisender Konusse mit nachgeordneten Fotozellen ermöglichen, wobei bei Abweichung des zu empfangenden Laserstrahles von der Mittelbezugsebene die in den einen Konus einfallende und zur nachgeordneten Fotozelle weitergeleitete Lichtintensität sofort von demjenigen Lichtintensitätswert abweicht, der von der dem zweiten Konus zugeordneten zweiten Fotozelle feststellbar ist. Vereinfachungen ergeben sich dann noch gemäß einer Weiterbildung der Erfindung durch Verwendung einer nachgeordneten kegelstumpfförmigen Sammellinse, auch Konzentrator genannt, weshalb kleiner dimensionierte Fotozellen verwandt werden könnnen, die wiederum preisgünstiger erhältlich sind.

Durch die erläuterten, zu einer mittleren Sollwertebene symmetrisch angeordneten,mit aufeinander zu weisenden Spitzen ausgerichteten Konusse wird ein äußerst exakter Feinsensorbereich ermöglicht. Um einen möglichst großen Empfangshöhenbereich bei dem Lasersensor bei preisgünstigen baulichen Maßnahmen zu gewährleisten, ist darüber hinaus auch ein sog. Grobsensorbereich vorgesehen, der jeweils nebeneinander angeordnete teil- bis vollzylinderförmige Sammellinsen mit dahinter montierten Fotozellen umfaßt.

Dieser Grobsensorbereich ist symmetrisch auf bei den Seiten zu der mittleren Sollwertebene vorgesehen.

Um sicherzustellen, daß beispielsweise eine Baumaschine möglichst selbsttätig in einer gewünschten Horizontal- oder Winkellage zur Horizontalen eine Bodenbearbeitung durchführt, ist in einer bevorzugten Ausführungsform der Erfindung ferner ein Lagedetektor vorgesehen, über den beispielsweise ein Bearbeitskopf bzw. ein Bearbeitungsgerät einer Baumaschine in einer Horizontal- oder in einer Hanglage in exakter voreingestellter Winkellage gehalten wird. Das Horizontalnivelliergerät mit dem Lagendetektor besteht dabei aus einem mit Kontaktsensoren versehenen Schwimmer. Um hier eine exakte Regelung vornehmen zu können, ist es wichtig, daß der Schwimmer an einem klar definierten Ablagepunkt abgestützt ist. Vor allem durch die ferner vorgesehene Einstellvorrichtung können in weiten Grenzen beliebige zur Horizontalen ansteigende bzw. abfallende Winkellagen voreingestellt werden, so daß über den Lagendetektor Abweichungen von der voreingestellten Winkellage jederzeit erkannt und darüber entsprechend Stellmotoren zur Gegensteuerung angesteuert werden können.

Vor allem auch in Verbindung mit dem erfindungsgemäßen Lasersensor ergibt sich die Möglichkeit, daß beispielsweise durch einen Lasergenerator eine vorher festgelegte Bezugsebene definiert wird, wobei der Laser-Rundumempfänger mit einer Steuereinrichtung und dem nachgeordneten Stellorgan automatisch immer das Bearbeitungsgerät in der vorbestimmten Höhenlage hält. Vor allem dann, wenn der Lasersensor auf dem Lagedetektor montiert oder mit diesem mitverschwenkbar gehalten ist, so läßt sich nicht nur eine Nachführung des Bodenbearbeitungsgerätes auf die durch einen Laser definierte und von dem Lasersensor registrierte Referenzebene in der Höhe durchführen, sondern vor allem auch eine gegebenenfalls notwendige automatische Anpassung eines Bearbeitungsteiles oder Bearbeitungskopfes einer Maschine selbsttätig auf die gewünschte Winkellage vornehmen.

Da also auch die von einem Lasergenerator voreinstellbare Bezugsebene schräg gewählt werden kann, wird dadurch gewährleistet, daß eine automatische Nachführung beispielsweise auch an schrägen Hängen automatisch durchführbar ist. Mit anderen Worten kann beispielsweise über eine Baumaschine die Einebnung eines Hanges völlig selbsttätig vorgenommen werden, da die einmal eingestellte Winkellage über den Lagendetektor und die Niveauhöhe über den Lasersensor, der die von dem Lasergenerator festgelegte Referenzebene erkennt, eingehalten werden.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1 :: eine schematische Vertikalschnittdarstellung eines ersten Ausführungsbeispieles eines Lagedetektors
- Figur 2 :: eine schematische Draufsicht auf das Ausführungsbeispiel nach Figur 1;
- Figur 3a :: eine Vertikalschnittdarstellung eines zweiten Ausführungsbeispieles eines Lagedetektors in schematischer Darstellung;
- Figur 3b :: eine schematische auszugsweise Draufsicht auf den Schwimmer und die Kontakteinrichtung gem. Figur 3a;
- Figur 4 :: eine ausschnittweise Vertikalschnittdarstellung des Lasersensors;
- Figur 5 :: eine Draufsicht auf den Lasersensor gem. Figur 4;
- Figur 6 :: eine schematische Schaltungsanordnung;
- Figur 7 :: eine weitere Abwandlung des Lasersensors;
- Figur 8 :: modifizierte Linsen 81 im Grobsensorbereich;
- Figur 9a und 9b :: eine schematische Vertikal- und Querschnittdarstellung eines weiteren Lasersensors;
- Figur 10 :: eine erweiterte Auswertelektronik.

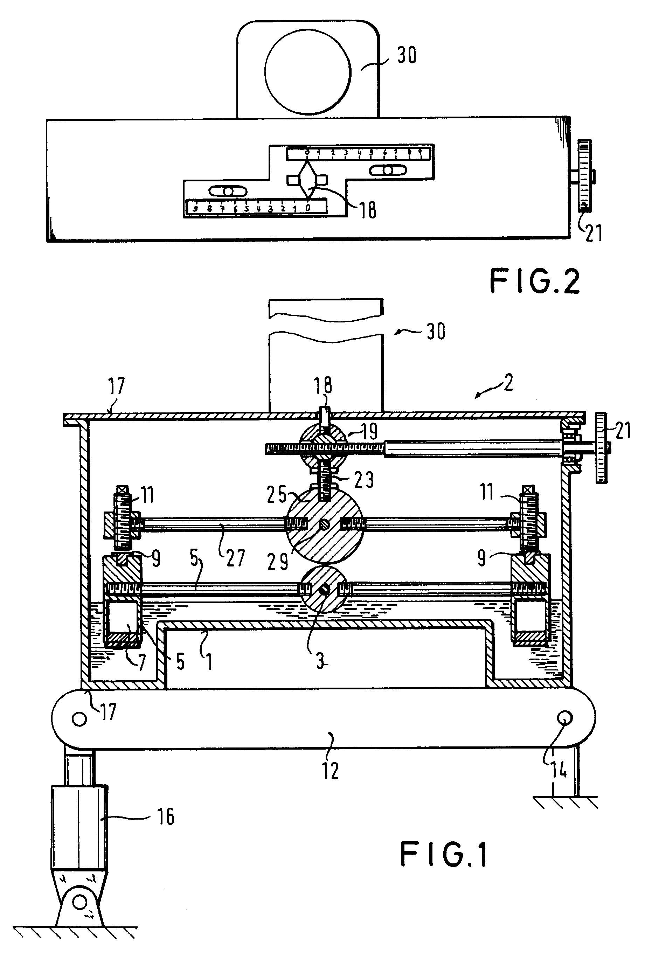

Nachfolgend wird auf die Figur 1 und 2 Bezug genommen, in denen ein erstes Ausführungsbeispiel eines für einen Lasersensor geeigneten Lagedetektors gezeigt ist.

In Figur 1 umfaßt ein einen Behälter 1 aufweisender Lagendetektor 2 einen um eine Mittelauflage 3 in einer Flüssigkeit um eine Achse verschwenkbaren Schwimmer 5 mit Schwimmkammern 7. In diesem Ausführungsbeispiel ist beispielsweise die Mittelauflage 3 aus einer zum Schwimmer 5 quer verlaufenden horizontalen Achse gebildet. Die Flüssigkeit selbst kann beispielsweise aus einem zähen Medium bestehen, um bei entsprechenden Erschütterungen den Schwimmer möglichst ruhig zu halten. Im Bereich seiner Längsenden ist der Schwimmer 5 jeweils mit Einrichtungen zur Erfassung einer Schräglage des Schwimmers versehen. Diese Einrichtungen bestehen aus jeweils einem Kontaktpaar aus zwei Kontaktteilen 9 und 11. Im gezeigten Ausführungsbeispiel sind die Kontakte bzw. Kontaktteile 9 auf dem Schwimmer 5 obenliegend im Bereich seiner beiden gegenüberliegenden Enden vorgesehen.

Diese wirken mit den entsprechend angeordneten jeweils zweiten Kontaktteilen zusammen, die im gezeigten Ausführungsbeispiel aus Kontaktsensoren 11 bestehen können, und die bei Berührung mit den jeweils am Schwimmer vorgesehenen Kontaktteilen 9 entweder elektrisch oder beispielsweise bei Magnetsensoren allein durch Annäherung an die Kontaktteile 9 schalten können. Bei elektrischen Schaltern stehen die Kontaktsensoren 11 des Schwimmers 5 selbst mit dem einen Pol einer Spannungsquelle in Verbindung, so daß bei Berührung mit dem jeweils anderen Kontaktteil 9 auf dem Schwimmer ein entsprechender Stellmotor 16 angetrieben werden kann, der im gezeigten Ausführungsbeispiel aus einem Hydraulikzylinder besteht.

Durch den Stellmotor 16 wird dann beispielsweise der Ausleger 12 einer Baumaschine über die horizontale Verschwenkachse 14 so angehoben oder abgesenkt, bis jedes Kontaktpaar 9, 11 wieder seine Neutrallage einnimmt, in der der Kontakt abreißt und die Stellmotoren ausgeschaltet werden.

Sind die Kontaktsensoren 11 exakt horizontal eingestellt, so wird automatisch immer eine Nachführung derart vorgenommen, bis eine Referenzfläche 17 am Behälter 1 exakt parallel zur Kontaktebene der Kontaktsensoren bzw. der Kontaktteile 9 liegt. An der erwähnten Referenzfläche 17 ist beispielsweise die Nivelliereinrichtung an der Baumaschine, d.h. im vorliegenden Fall am Ausleger 12 der Baumaschine, angebracht. Ebenso können natürlich an der Unterseite des Behälters direkt über dem Boden abgestützte höhenverstellbare Stellantriebe zur Nachführung des Behälters vorgesehen sein. Figur 1 soll dabei nur den prinzipiellen Aufbau wiedergeben. In der Regel sitzt der Lagedetektor 2 auf einem Ausleger 12 einer fahrbaren Baumaschine.

Mit der erläuterten Nivelliereinrichtung kann aber auch eine beliebige Winkellage eingestellt werden. Dazu ist eine Einstellvorrichtung 19 vorgesehen, die über ein rechtes Einstellrad 21 betätigt wird. Am Spindelende der Einstelleinrichtung 19 wird über eine Querstrebe 23 eine Achsenhalterung 25 eines Einstellbalkens 27 so angesteuert, daß der Einstellbalken 27 um eine zur Mittelauflage 3 parallele Achse 29 in Figur 1 im Uhrzeigersinn bzw. im Gegenuhrzeigersinn verstellt wird, so daß die außenliegend am Einstellbalken 27 angeordneten oberen Kontaktteile 11 beispielsweise links abgesenkt und rechts angehoben werden. Bei entsprechender Gegendrehung am Einstellrad 21 erfolgt die Verstellung der oberen Kontakteile bzw. Kontaktsensoren 11 umgekehrt.

Dadurch wird also bewußt z. B. durch die Verdrehung des Einstellbalkens 27 im Uhrzeigersinn der rechte obere Kontaktteil bzw. Kontaktsensor 11 in Berührung mit dem Kontaktteil 9 am Schwimmer 5 gebracht und drückt diesen entgegen der Auftriebskraft weiter in die Flüssigkeit hinein. Durch den ausgelösten Kontakt wird nunmehr der Stellmotor 16 so angetrieben, daß der Ausleger 12 und damit der Behälter 1 in Figur 1 links abgesenkt wird. Dieser Absenkvorgang hält so lange an, bis so viel Flüssigkeit von rechts nach links im Behälter 1 herübergeflossen ist, daß der Schwimmer wieder allein unter Einwirkung der Gravitations- und Auftriebskräfte seine natürliche Horizontallage einnimmt, in der zwischen den Kontaktsensoren 11 und den Kontakten bzw. Kontaktbereichen 9 keine Berührung bzw. keine Wechselwirkung mehr besteht, also der erwähnte Stellmotor 16 wieder ausgeschaltet wird. Mit anderen Worten wird der Stellmotor 16 genau dann abgeschaltet, wenn nunmehr der in bezug auf den Behälter 1 bewußt in einem bestimmten Winkel schiefwinkelig eingestellte Einstellbalken 27 wieder exakt parallel und horizontal zur Flüssigkeitsoberfläche zu liegen kommt.

Dadurch weist aber nunmehr der Behälter bzw. die Referenzfläche 17 exakt die so reproduzierte eingestellte Winkellage auf. Der eingestellte Winkel kann zudem an der Anzeige 18, wie in Figur 2 gezeigt ist, in Draufsicht abgelesen werden.

Ferner ist auf dem Behälter 1 obenliegend noch ein Lasersensor 30 nach Art eines Rundumempfängers vorgesehen, mit dem eine exakte Lage bezüglich einer durch einen Laserstrahl definierten Bezugsebene gleichzeitig eingestellt und nachgeführt werden kann. Hierauf wird aber später noch eingegangen.

Mit dem geschilderten Ausführungsbeispiel ist eine Nivellierung um eine Verstellachse 14 längs einer Geraden möglich.

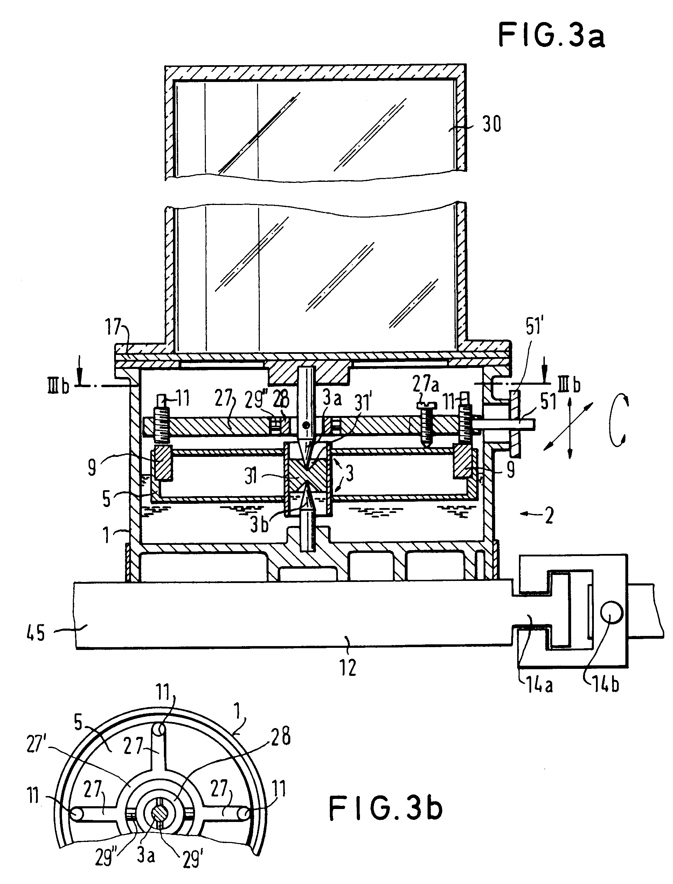

In dem anhand von Figuren 3a und 3b gezeigten Ausführungsbeispiel ist ferner eine Nivellierung in einer Ebene durchführbar, wobei Teile, die der Ausführungsform gemäß den Figuren 1 und 2 entsprechen, mit gleichen Bezugszeichen versehen sind.

Dazu ist in diesem Ausführungsbeispiel der Schwimmer 5 kreisförmig ausgebildet und weist jeweils paarweise um 90° versetzt zueinander liegende Kontaktteile bzw. Kontaktbereiche 9 auf, die mit entsprechenden jeweils darüber liegenden kreuzweise angeordneten weiteren Kontaktteilen bzw. Kontaktsensoren 11 zusammenwirken, die an einem in Figur 3b kreuzweise gestalteten Einstellträger 27 gehalten sind. Der Schwimmer 5 ist auch über eine Mittelauflage 3 in Form eines Dornes exakt abgestützt, um klar reproduzierbare exakte Werte zu erzielen. Die Mittelauflage bzw. der Dorn 3a stehen in ständiger Berührung mit dem Schwimmer 5 und stützen den aufgrund der Auftriebskräfte nach oben drückenden Schwimmer 5 in seinem Zentrum ab.

Dazu ist am Schwimmer 5 ein konisches Aufnahmeglied 31 vorgesehen, die in einer Hülse über ein Schraubgewinde zur Justierung höhenverstellbar ist. Ebenso ist der Dorn 3a, der als Mittelauflage 3 dient, durch ein Schraubgewinde im Deckel des Gehäuses 1 ebenfalls in seiner Vertikallage verstellbar, um eine Feinjustierung vornehmen zu können.

Die konkave Ausnehmung 31' wird dabei in der Höhe so angeordnet, daß deren tiefster Punkt, an der der Dorn 3a mit seiner Spitze ansetzt, im Schwenkmittelpunkt des Schwimmers 5 liegt.

In bestimmten Einsatzfällen kann anstelle des Dornes 3a auch ein unterer Dorn 3b verwandt werden, wenn der Schwimmer nach Art eines Waagebalkens hierin aufgehängt werden soll und der Schwerpunkt des Schwimmers unterhalb der Mittelauflage zu liegen kommt. Dann soll der untere Dorn 3b mit seiner Spitze exakt im Schwenkmittelpunkt des Schwimmers liegen. Der jeweils gegenüberliegende Dorn 3a bzw. 3b, der ebenfalls in eine zur ersten Ausnehmung gegenüberliegende zweite ebenfalls konkave und konische Ausnehmung 31' im Aufnahmeglied 31 eingreift, wird dann so justiert, daß er nur zur reinen Absicherung im Abstand von dem konischen Aufnahmeglied 31 endet, ohne dieses zu berühren. Dieser Abstand ist in Figur 3a aufgrund seiner geringen Größe nicht erkennbar. Durch den Abstand aber wird eine Verschwenkbewegung des Schwimmers nicht behindert.

Abweichend von den gezeigten Ausführungsbeispielen nach den Figuren 1 bis 3 können auch berührungs- und kontaktlos arbeitende Analogschalter als Kontaktsensoren 11 verwandt werden. Dabei kann für jeweils ein Paar um eine Achse verschwenkbare Kontaktsensoren 11 ein einziger auf einer Seite der Verschwenkachse anbringbarer Analogschalter vorgesehen sein, der eine Relativlagenveränderung des Abstandes zwischen Analogschalter und Schwimmer aus einer voreinstellbaren Nullpunktlage heraus erkennt und ein entsprechendes Signal zur Gegensteuerung abgibt. Ferner kann eine Schwingungsbegrenzung und Dämpfung dadurch erzielt werden, daß, wie in Figur 3 eingezeichnet, beispielsweise im Einstellbalken an einer Seite bezüglich der Mittelauflage 3 eine Abstandsschraube 27a eingedreht ist, die ein Verschwenken des Schwimmers 5 auf den nur an dieser Seite des Einstellbalkens 27 angeordneten Analogschalter beschränkt. Der verschwenkbare Schwimmer kann dabei sogar auf lediglich 1/10 mm eingestellt werden, was heißt, daß der Schwimmer über die zum Analogschalter eingestellte Nullpunktlage nur um 1/10 mm auf einer Seite überschwingen kann. Auf der gegenüberliegenden Seite ist kein Analogschalter und ebenso keine Begrenzung vorgesehen. Bei einer horizontalen Regulierung werden also anstelle zweier Paare von Kontaktsensoren 11 lediglich zwei einzelne Analogschalter benötigt.

Diese Justiereinrichtung eignet sich vor allem auch für bewegte Objekte, wobei besonders gute Ergebnisse gerade nicht bei Verwendung von elastischen flüssigen, sondern vor allem dünnflüssigen Medien für den Schwimmer erzielt werden.

In bestimmten Einsatzfällen hat sich auch eine Lagerung 3 für den Schwimmer 5 unter Zuhilfenahme eines Kugelgelenkes oder eines kardanischen Gelenkes als besonders günstig erwiesen.

Durch die Abstützung des Schwimmers gemäß dem Ausführungsbeispiel kann dieser um zwei aufeinander senkrecht stehende Achsen entsprechend der Lage des Behälters 1 in der Flüssigkeit schwimmend verschwenkt werden. In diesem Ausführungsbeispiel ist beispielsweise der Ausleger 12 einer Baumaschine um zwei senkrecht zueinander stehende Achsen 14a und 14b aus der Horizontalebene verschwenkbar. Beiden Achsen 14a und 14b ist jeweils ein Stellmotor zugeordnet, wie er als Stellmotor 16 im Ausführungsbeispiel in Figur 1 vom Prinzip her gezeigt ist. Sobald der Ausleger 12 aus der eingestellten Nivellierlage herausgeschwenkt wird, können entsprechend der Verstellrichtung jeweils ein oder beispielsweise zwei Kontaktpaare 11, 9 jeweils einen Kontakt auslösen, wodurch der jeweils zugehörige eine oder aber auch beide Stellmotoren gleichzeitig möglicherweise für unterschiedlich lange Zeit so betrieben werden, bis die zugehörigen Verstellachsen 14a und 14b wieder so rückverstellt worden sind, daß der Ausleger 12 und damit der Lagedetektor 2 wieder seine an ihm eingestellte Nivellierlage einnimmt.
Auch in diesem Ausführungsbeispiel kann ein kreuzförmiger oder ebenfalls tellerförmig ausgestalteter Einstellbalken 27 durch Betätigung eines an einer Seite überstehenden Betätigungsendes 51 in eine bestimmte Winkellage eingestellt werden, so daß ein oder zwei nebeneinander liegende Kontaktsensoren 11 mit den Kontakten 9 in Wechselwirkung treten und die jeweils zugeordneten Stellmotoren 14a und 14b so antreiben, bis der Einstellbalken 27 wieder eine Horizontallage und damit die Referenzfläche 17 die eingestellte Winkellage zur Horizontalen einnimmt. Dazu ist der Einstellbalken 27 am Gehäuse 1 über den Dorn 3a gehalten, und zwar über eine am Dorn 3a verankerte erste Verstellachse 29', an deren freien Enden ein den Dorn 3a in ausreichendem Abstand umgebender Ring 28 angeordnet ist, von dem wiederum um 90° versetzt eine zweite Achse 29" ausgeht, an deren Enden der Einstellbalken 27 drehbar gehalten wird. Der kreuzförmige Einstellbalken 27 weist also in seinem Zentrum einen die einzelnen Arme des kreuzförmigen Einstellbalkens 27 tragenden Ringabschnitt 27' auf. Hierdurch wird eine kreuzförmige Gelenkaufhängung geschaffen.

Durch Anheben oder Absenken des Betätigungsendes 51 kann also eine Verstellung um die Achse 28 und durch Verdrehung des Betätigungsendes 51 um seine Achse eine Verstellung um die Achse 30 vorgenommen werden, wobei auch beide Achsen gleichzeitig verstellt werden können. Um eine voreingestellte Winkellage fest zu justieren, ist ein Feststellrad 51' auf dem Betätigungsende 51 drehbar gelagert, welches beim Festdrehen sich gegenüber dem Gehäuse reibschlüssig abstützt und dadurch die vorgewählte Winkellage fixiert.

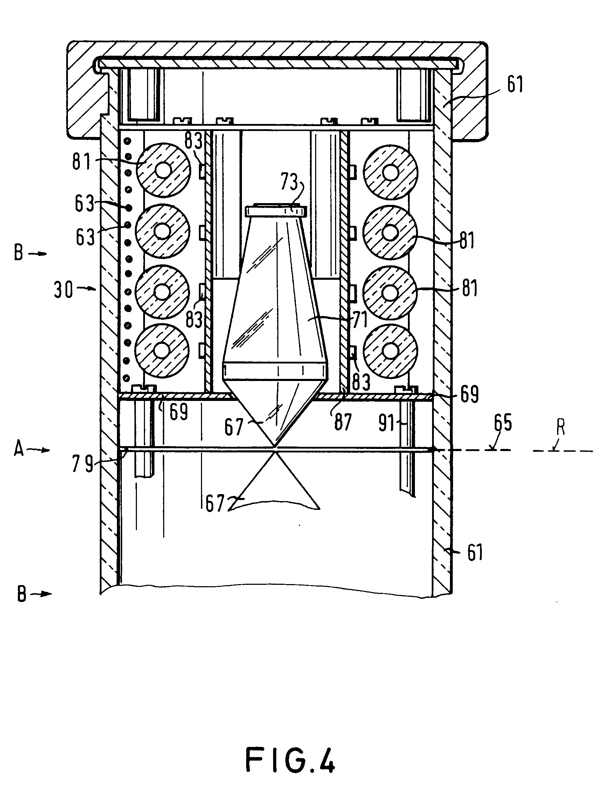

Nachfolgend wird nunmehr unter Bezugnahme auf die Figuren 4 bis 6 der in den Figuren 1 bis 3 bereits erwähnte Lasersensor 30 näher erläutert.

Der Lasersensor 30 ist nach Art eines Rundum-Laserempfängers gestaltet und umfaßt einen Glaskolben 61 mit dahinter umlaufendem Maschengitter 63 zur Abschirmung von vor allem schräg einfallendem diffusem Licht. Der Lasersensor ist zu seiner mittleren Sollebene 65 symmetrisch ausgestaltet und umfaßt zwei aufeinander zu weisende Kegel- oder Polygonalprismen 67, die jeweils durch eine Metallplatte 69 hindurchreichen. Durch die beiden gegenüberliegenden Metallplatten 69 parallel zur Sollebene 65 wird der sog. Feinsensorbereich A gebildet. Das Maschengitter 63 ist in Fig. 4 nur in der linken Schnittdarstellung eingezeichnet.
An der Basisfläche der Kegelprismen schließt sich jeweils ein sich nach hinten verjüngendes kegelstumpfförmiges Prisma als Sammellinse bzw. Konzentrator 71 an, an dessem Ende ein Lichtdetektor in Form einer Fotozelle 73 angeordnet ist.

Durch einen nicht näher gezeigten rundum-sendenden Lasergenerator kann eine bestimmte, beispielsweise horizontale Referenzebene R festgelegt werden. Fällt der vom Lichtgenerator ausgesandte Laserstrahl in den Feinsensorbereich A ein, so wird der Laserstrahl je nach Einfallslage oberhalb oder unterhalb der Sollwertebene 65 in das obere oder untere Prisma einfallen und dort gebrochen. Der Glasindex ist derart gewählt, daß parallel zur Nivellierungsebene 65 einfallendes Licht an der Prismamantelfläche reflektiert wird, vorzugsweise um etwa 90°. Durch die Sammellinse 71 kann eine Fotozelle 73 mit geringerem Flächenmaß verwandt werden, die erheblich kostengünstiger ist.

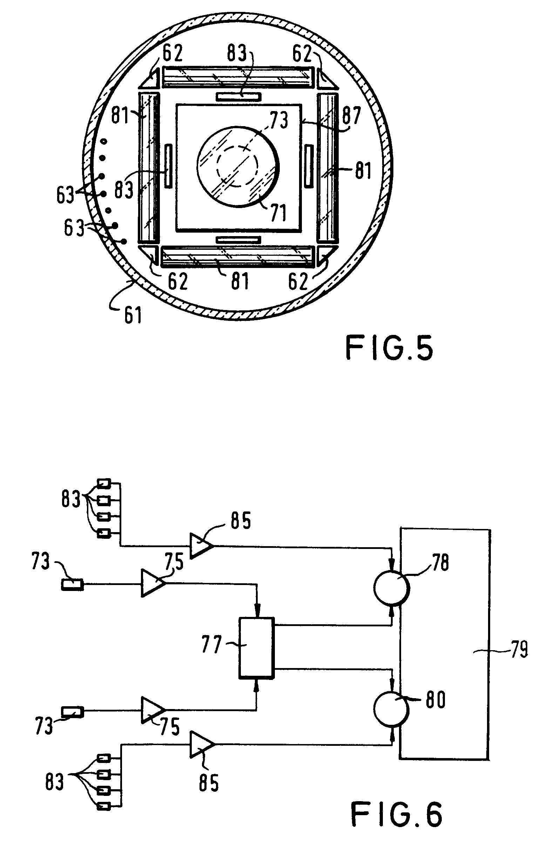

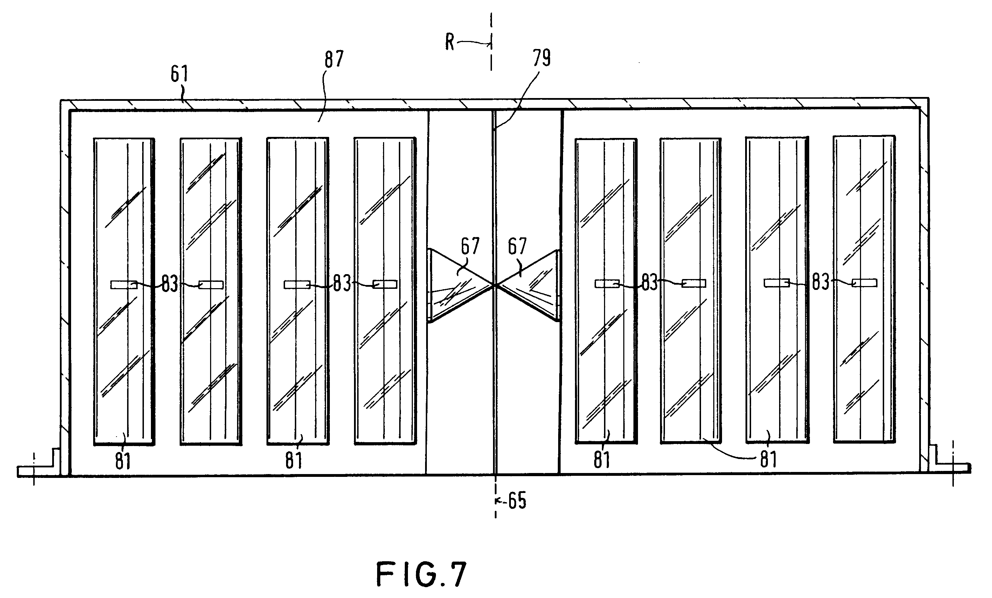

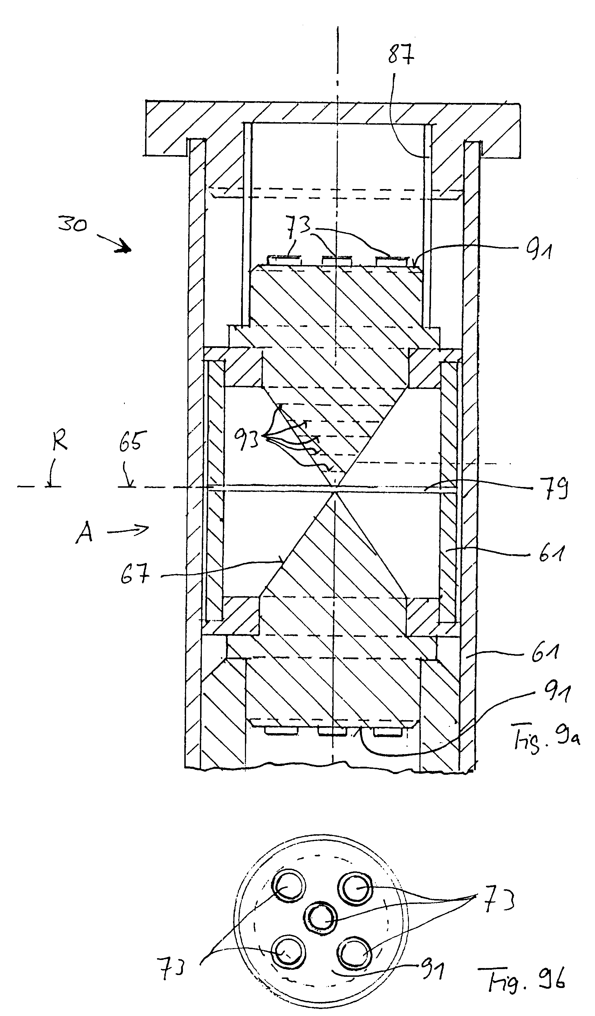

Das über die Fotozelle 73 empfangene Lichtsignal wird also in ein Stromsignal umgesetzt, einem in Figur 6 gezeigten Verstärker 75 und einem nachgeordneten Komperator 77 zugeführt, in dessen Abhängigkeit ein Steuereingang 78 bzw. 80 zum Anheben oder Absenken eines Stellmotors 79 betätigt wird.

Fällt nunmehr der zu empfangende Laserstrahl beispielsweise lediglich in das obere Prisma ein, weil das den Lasersensor tragende Baugerät zu tief abgesackt ist, so wird der Stellmotor 79 so lange in Richtung "Heben" betrieben, bis der Laserstrahl exakt zwischen den Spitzen der beiden kegelförmig aufeinander zu laufenden Prismen 67 kreuzt und über den Komperator 77 das Signal "Gleiche Intensität an beiden Fotozellen 73" gemeldet wird, über welches der Stellmotor abgeschaltet wird. Sollte der Laserstrahl lediglich und vor allem mit größerer Intensität in das untere Kegelprisma 67 einfallen, so wird der Stellmotor 79 über den Komperator 77 in entgegengesetzter Richtung "Senken" gesteuert, bis die Referenzfläche R, also der vom Lasergenerator ausgesandte Laserstrahl, wieder exakt durch die Spitzen bzw. zwischen den Spitzen der Prismen 67 hindurch verläuft.

Bei vertikaler Ausrichtung des Lasersensors 30 kommen dann die Sollebene 65 und die Referenzebene R deckungsgleich zu liegen.

Als günstig hat sich dabei ferner noch erwiesen, eine äußerst dünne Sichtblende 79 zwischen den beiden Kegelprismen 67 vorzusehen.

Sollte der zu empfangende Laserstrahl außerhalb des Feinsensorbereiches A auf dem Lasersensor auftreffen, so ist hier noch ein weiterer Grobsensorbereich B vorgesehen. Dieser besteht aus im gezeigten Ausführungsbeispiel jeweils parallel übereinander angeordneten Zylinderlinsen 81, die in vier Bahnen nebeneinander liegend innerhalb des Glaskolbens 61 an einem Träger 62 montiert sind, wie sich dies auch aus Figur 5 ergibt. Hinter jeweils einer Zylinderlinse 81 ist ebenfalls eine Fotozelle 83. Fällt ein Laserstrahl auf eine derartige Zylinderlinse 81, so wird dieses Bild jeweils als linienförmige Abbildung in etwa halber Höhe der Zylinderlinse 81 projiziert. Da der Laserstrahl des Lasergenerators in einem vorgegebenen Flächenbereich abgelenkt wird oder beispielsweise rotiert, um eine Referenzebene festzulegen, wird immer eine ausreichende Lichtintensität auf die dahinter angeordnete Fotozelle 83 fallen.

Die von den Fotozellen 83 auf einer Seite der Sollebene 65 empfangenen Signale können jeweils auf einem gemeinsamen Verstärker 85 gegeben werden, wobei in Abhängigkeit eines derartigen am Verstärker 85 auftretenden Steuersignals für den oberen Grobsensorbereich B oder für den am zweiten Verstärker 85 für den unteren Grobsensorbereich B jeweils der zugehörige Stellmotor 79 beispielsweise über seinen Steuereingang 78 auf Anheben oder über seinen Steuereingang 80 auf Absenken angesteuert wird.

Natürlich können auch hier die beiden Signale aus den Verstärkern 85 noch zusätzlich einem Komperator zugeführt werden, obgleich dies hier grundsätzlich nicht notwendig ist, da der Laserstrahl entweder nur oberhalb oder nur unterhalb der mittleren Sollebene 65 in dem Grobsensorbereich einfallen kann.

Nur der Vollständigkeit halber wird erwähnt, daß die Sammellinse 71 durch eine geschlossene Metallummantelung 87 und eine obere Abdeckung 89 nach außen hin abgeschirmt ist.

Die untere in Figur 4 gezeigte Hälfte des Lasersensors 30 ist identisch zur Symmetrieebene 65, weshalb beide Hälften über Abstandsglieder 91 verbunden sind.

Soll beispielsweise mit einer Baumaschine eine bestimmte Neigungsfläche bearbeitet werden, so kann bei der Sensorgesteuerten Nivelliereinrichtung einmal der Lagedetektor 2 auf diesen Winkel eingestellt werden, so daß der auf der Baumaschine bzw. bezüglich der Referenzfläche 17 des Lagedetektors 2 montierte Lasersensor 30 in entsprechender Höhenlage auf die von einem Lasergenerator erzeugte Referenzfläche ausgerichtet werden kann, wobei das so mit dem Sensorgesteuerten Nivelliergerät in Verbindung stehende Bearbeitungsgerät in der geschilderten Weise exakt in der eingestellten Nivellierlage und exakt in der Höhenlage zu der vom Lasergenerator bestimmten Referenzebene gehalten wird. Selbst wenn die Baumaschine über Unebenheiten fahren sollte, wird das Bearbeitungsgerät über das sensorgesteuerte Nivelliergerät exakt in der gewünschten Position durch entsprechende Gegensteuerung der erwähnten Steuermotoren gehalten . Die Ausrichtung eines Bodenbearbeitungsgerätes auf eine bestimmte Horizontal- oder Neigungsfläche durch den Lagedetektor 2 ist z. B. bei Geräten wichtig, wie sie aus der US-A-4,538,544 bekannt sind.

Um eine Übersteuerung des Nivelliergerätes beispielsweise beim Überfahren von Bodenunebenheiten zu vermeiden, kann ferner noch eine mechanisch, magnetisch oder elektrisch wirkende Dämpfungseinrichtung vorgesehen sein, die bei dem Lagedetektor 2 vorzugsweise im Bereich der Mittelauflage 3 angeordnet ist und dort wirkt.

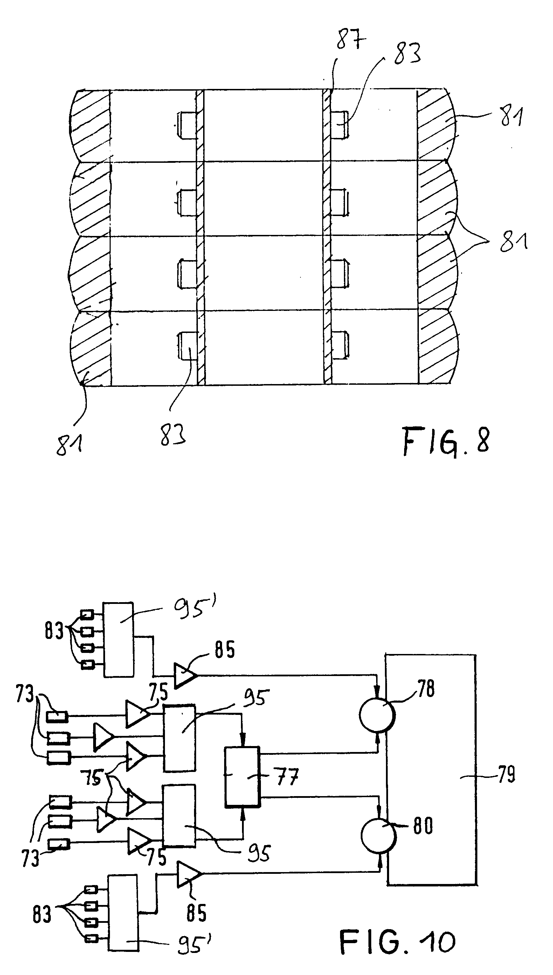

Darüber hinaus wird noch auf Fig. 7 verwiesen, in der eine Abwandlung des Lasersensors 30 gezeigt ist. Dieser Lasersensor ist "flächenhaft" aufgebaut und umfaßt in einem geschlossenen Gehäuseteil 87 in einem mittleren Fensterbereich die beiden aufeinander zu weisenden Kegel- oder Polygonalprismen 67. Daran schließen sich verdeckt die anhand von Figur 4 erläuterten kegelstumpfförmigen Prismen bzw. Konzentratoren 71 mit an deren Enden sitzenden Fotozellen 73 an.

Die teil- bis vollzylinderförmigen Linsen 81 zur Bildung jeweils eines beidseitig symmetrisch zur mittleren Sollebene 65 liegenden Grobsensorbereiches B sind hier nur auf dem Lasersensor in einer Reihe quer zur Sollebene 65 in Parallellage parallel zur Sollebene 65 nebeneinander angeordnet. Dahinter befindet sich wieder jeweils eine Fotozelle 83, die abweichend vom gezeigten Ausführungsbeispiel auch in paralleler Längsrichtung zu den einzelnen teil- bis vollzylinderförmigen stabförmigen Linsen 81 liegen können. Diese Anordnung eignet sich insbesondere beispielsweise dann, wenn ein Bodenbearbeitungsgerät längs einer Geraden eine Bearbeitung vornehmen soll. In diesem Fall wird vorzugsweise durch einen Lasergenerator keine horizontale, sondern eine vertikale Referenzebene R festgelegt, wobei der Lasersensor 30 in der in Figur 7 gezeigten Horizontallage an dem Bearbeitungsgerät angebracht wird.

Sobald das Bodenbearbeitungsgerät nach links oder rechts von der vertikal definierten Referenzfläche abweicht, wird eine Gegenbewegung vorgenommen, indem beispielsweise das Bodenbearbeitungsgerät nach links bzw. rechts seine Fahrtrichtung ändert, bis die Sollebene 65 wieder deckungsgleich mit der Referenzebene R zu liegen kommt. In diesem Ausführungsbeispiel müssen also nicht mehrere nebeneinander liegende Reihen von Linsen 81 unter Bildung eines mehr oder weniger geschlossenen Polygons vorgesehen sein, da hier kein Rundumempfang notwendig ist.

Natürlich könnte der Feinsensorbereich A durch entsprechend lang ausgebildete Kegel- bzw. Polygonprismen 67vergrößert werden. Allerdings nehmen die Kosten derartiger Bauteile mit ihrer Axiallängserstreckung deutlich zu. Demgegenüber ist die Verwendung eines benachbart zum Feinsensorbereich ausgebildeten Grobsensorbereiches B entsprechend dem geschilderten Aufbau sehr viel kostengünstiger. Zwar kann in dem Grobsensorbereich B eine exakte Lagenerkennung nicht mit vergleichbarer Genauigkeit durchgeführt werden. Dies ist aber auch nicht wichtig. Denn sobald der Laserstrahl in den Grobsensorbereich B gelangt, kann mit dem Lasersensor grundsätzlich erkannt werden, daß eine Gegensteuerung wieder vorgenommen werden muß. Eine hochauflösende und hochgenaue präzise Lageerkennung ist also nur in der unmittelbaren Nähe der eigentlichen Sollwertebene 65 notwendig, so daß lediglich hier die Kegel- bzw. Polygonprismen 67 angeordnet sind, durch die die mit einfachen Mitteln äußerst exakte Lageerkennung ermöglicht wird.

Abweichend vom gezeigten Ausführungsbeispiel können auch zylinderförmige Linsen verwandt werden, die nicht als Vollzylinder, sondern nur als Halb- oder Teilzylinder mit einem kreissegmentförmigen Querschnitt verwandt werden, wie dies in Figur 8 im Schnitt gezeigt ist.

Auch im Querschnitt elliptische Linsen sowie im Querschnitt polygonförmige Linsen sind möglich.

Der erfindungsgemäße Lasersensor 30 weist aber noch den weiteren Vorteil auf, daß mit ihm nicht nur eine Abweichung der Sollebene 65 von der Referenzebene R sehr genau erkannt, sondern vor allem auch in Abhängigkeit von der Größe der festgestellten Abweichung eine besonders schnelle, ggfls. proportionale Gegensteuerung über einen Stellmotor möglich ist.

Dazu wird zur Erläuterung auf Figur 9a und 9b verwiesen. In Figur 9a ist der Lasersensor 30 lediglich mit seinem Feinsensorbereich A dargestellt. Ein derartiger Lasersensor kann in vielen Fällen ausreichend sein, wenn in der Regel die Abweichungen des Lasersensors gegenüber der Referenzebene R nicht größer ist als die Höhe des Kegels 67. Ansonsten ist auch der in Figur 9a und 9b gezeigte Lasersensor 30 noch mit einem Grobsensorbereich auf beiden Seiten der Symmetrieebene zu ergänzen.

In dieser Ausführungsform sind an der Basis, d.h. am Kegel- bzw. Polygonprismaboden 91 mehrere Fotozellen 73 angeordnet, die in der Regel auf unterschiedliche Lichtintensitäten ansprechen.

Weicht beispielsweise die mit dem Lasersensor 30 ausgestattete Baumaschine oder ein anderes Bodenbearbeitungsgerät von der festzustellenden Referenzebene R ab, so könnte kurzzeitig der Lasersensor in einer der strichliert gezeigten Ebenen 93 beispielsweise im oberen Kegel 67 einfallen. Bereits aus dieser strichlierten Ebenen-Darstellung 93 ist ersichtlich, daß die in das Kegel- bzw. Polygonprisma 67 einfallende Lichtintensität mit zunehmender Abweichung entsprechend dem zunehmenden Durchmesser des Kegels 67 zunimmt. Unter Berücksichtigung einer in Figur 10 dargestellten Auswertschaltung 95, deren übriger Aufbau grundsätzlich der Schaltungsanordnung gemäß Figur 6 entspricht, werden die jeweils mehreren am Kegel- bzw. Polygonprismaboden 91 angeordneten Fotozellen 73 jeweils über einen Verstärker 75 an die Auswerschaltung 95 angeschlossen. Bei nunmehr zunehmend stärkeren Abweichungen der Referenzebene R und damit stärker einfallender Lichtintensität werden dann die Fotozellen 73 aktiviert, die erst mit einer auf größere einfallende Lichtintensitäten ansprechenden Charakteristik versehen sind. Über die Auswertschaltung 95 kann in Abhängigkeit des größeren Eingangssignal dann beispielsweise ein größeres Ausgangssignal zu dem Stellmotor 79 weitergegeben werden, um schneller bzw. mit größerer Wegstrecke gegenzusteuern.

Da bei einer Gegensteuerbewegung die Referenzebene wieder zunehmend mehr von einer tiefer liegenden Ebene hin zur Spitze des Kegelprismas 67 verschoben wird, fällt während der Gegensteuerbewegung eine zunehmend geringere Laserintensität über die Referenzebene in das Kegelprisma 67 ein, so daß darüber wieder nur die Fotozellen geringerer Ansprechcharakteristik "aktiviert werden", wobei während des Verstellvorganges somit also der Stellmotor so angesteuert wird, daß er zunehmend mit geringerer Verstellgeschwindigkeit arbeitet. Mit anderen Worten wird bei einer Gegensteuerbewegung, bei der die Sollebene 65 wieder identisch zur Referenzebene R liegen soll, die Gegensteuerbewegung bis zur identischen Lage beider Ebenen beginnend mit schnellen Gegensteuerbewegungen zunehmend langsamer vollzogen.

Dadurch wird die Gegensteuerbewegung verfeinert und mögliche Überschwingungen aufgrund einer zu weiten und zu intensiven Gegensteuerbewegung weitgegehend vermieden.

Abweichend vom gezeigten Ausführungsbeispiel kann anstelle der jeweils mehreren Verstärker 75 gegebenenfalls nur ein Verstärker 75 nach der Auswertschaltung 95 vorgesehen sein.

Möglich wäre auch die Verwendung mehrerer Fotozellen an dem Kegel- bzw. Polygonprismaboden 91, die auf gleiche Lichtintensität ansprechen. Da nämlich mit zunehmend tiefer und näher am Boden 91 einfallender Laserstrahl-Referenzebene auch in die zunehmend weiter außenliegenden Fotozellen Licht einfällt, so läßt sich auch hier über eine Auswertschaltung 95 eine entsprechend unterschiedlich schnelle Gegensteuerbewegung für einen Stellmotor erzeugen. Da das Ausgangssignal der Fotozelle proportional zur einfallenden Lichtintensität ist, kann gegebenenfalls auch über eine einzige Fotozelle 73 ein proportionales Ausgangssignal erzeugt werden, um bei stärkerem Lichteinfall eine schnellere Gegensteuerung durchzuführen. Bei hydraulischem Stellmotor 79 könnte dies beispielsweise heißen, daß mit zunehmend stärker einfallender Lichtintensität ein dem Stellmotor 79 zugeordnetes Schaltventil weiter öffnet, so daß bei größerer Abweichung mehr Hydraulikmedium und/oder Hydraulikmedium mit höherem Druck den Stellkolben eines Stellmotors beaufschlagt.

Eine ähnliche Erkennungsschaltung kann auch für den Grobsensorbereich B vorgenommen werden. Dies wird anhand von Figur 10 ersichtlich. Hier sind die einzelnen Fotozellen 83, die jeweils mit zunehmendem Abstand von der Sollebene 65 hinter einer jeden einzelnen Sammellinse 81 liegen, an die Auswertschaltung 95' angeschlossen.

Mit dieser Auswertschaltung 95' kann erkannt werden, welche der unterschiedlich weit von der Sollebene entfernt liegenden Fotozellen 83 gerade anspricht. Dabei wird in der Auswertschaltung ein entsprechend unterschiedliches Ausgangssignal erzeugt, über das dann wieder der Stellmotor 79 schneller und stärker gegengesteuert wird, wenn die Laser-Referenzebene R in eine Fotozelle 83 einfällt, die von der Sollebene 65 weiter entfernt liegt. Bei der daraufhin durchgeführten Gegensteuerbewegung wandert dann auch der Laserstrahl in der Referenzebene von weiter außen in Richtung auf die Sollebene 65 zu, wobei dann die einzelnen näher liegenden Fotozellen 83 aktiviert werden, wodurch während des Steuervorganges die Gegensteuerbewegung zur Sollebene 65 hin zunehmend langsamer durchgeführt wird.

Ergänzend zu dem geschilderten Ausführungsbeispiel insbesondere unter gleichzeitiger Verwendung des Lagedetektors 3 und des Lasersensors 30 als gemeinsames integriertes sensorgesteuertes Nivelliergerät können aber in vielen Einsatzfällen sowohl nur der Lagedetektor 2 oder auch nur der Lasersensor 30 eingesetzt werden. Dabei kann der Lasersensor 30 nur mit einem Feinsensorbereich ausgestattet sein. Diese Ausführungsform genügt vor allem immer dann, wenn eine Abweichung der Referenzebene über die Höhe des Kegel- oder Polygonprismas nicht zu erwarten ist. Durch den sich anschließenden Grobsensorbereich B wird aber der "Detektorbereich" insgesamt mit einfachen Mitteln beliebig vergrößerbar. Soll nur mit gröberer Rasterung die Abweichung einer Referenzebene von einer Sollwertebene erkannt werden, so könnte in bestimmten Einsatzfällen sogar der Feinsensorbereich weggelassen und der gesamte Lasersensor 30 nur mit den Sammellinsen 81 entsprechend dem sog. Grobsensorbereich aufgebaut sein.

Im Zweifelsfall könnten dann die Sammellinsen 81 im Bereich der Sollebene mit geringerem Linsendurchmesser, d.h. geringerer Linsenhöhe quer zur Nachbarlinse ausgebildet sein.

In den Zeichnungen weisen die Zylinderlinsen 81 einen geringfügigen Abstand zu einer Nachbar-Zylinderlinse 81 auf. Der Abstand ist in der Regel kleiner als der vom Lasersensor empfangene Laserstrahl-Durchmesser, durch den die Referenzebene festgelegt wird. In diesem Fall fällt der Laserstrahl also immer in zumindest eine Zylinderlinse 81 ein. Natürlich können sich die Zylinderlinsen 81 auch berühren, so daß kein Abstand zwischen zwei benachbarten Zylinderlinsen 1 zurückbleibt, wie dies in Figur 8 dargestellt ist.

## Patentansprüche

1. Sensorgesteuertes Nivelliergerät mit einem Lasersensor (30) zur Sollebenenerkennung bezüglich einer durch einen Laserstrahl vorgegebenen Referenzfläche (R), und mit einer Auswertelektronik, über die zumindest ein auch den Lasersensor (30) tragender bzw. mitverstellender Stellantrieb (79) entgegen einer Relativlagenveränderung des Lasersensors (30) gegenüber der Referenzfläche (R) im Sinne eines Nachführens auf die Referenzfläche (R) zu gegensteuerbar ist, **dadurch gekennzeichnet,** daß der Lasersensor (30) einen Feinsensorbereich (A) mit zwei zur Sollebene (65) symmetrisch liegenden,mit ihren konischen Verjüngungen aufeinanderzu weisenden und in unmittelbarer Nähe zueinander endenden Kegel- bzw. Polygonprismen (67) umfaßt, an deren Basis zumindest mittelbar jeweils eine Fotozelle (73) sitzt, und daß die Auswertelektronik eine Komparatorschaltung (77) umfaßt, über die bei unterschiedlichem Lichtintensitätseinfall in die beiden Kegel- bzw. Polygonprismen (67) der zumindest eine Stellmotor (79; 78; 80) solange ansteuerbar ist, bis der die Referenzsignalebene (R) definierende und zu empfangende Laserstrahl mittig zwischen den beiden aufeinanderzu weisenden Spitzen der Kegel- bzw. Polygonprismen (67) hindurchläuft.

2. Sensorgesteuertes Nivelliergerät nach Anspruch 1, **dadurch gekennzeichnet,** daß an der Basis der Kegel- bzw. Polygonprismen (67) jeweils eine Sammellinse (77) in Form eines sich nach hinten verjüngenden Kegel- bzw. Polygonstumpfes sitzt, an deren hinteren Begrenzungsfläche eine Fotozelle (73) angebracht bzw. nachgeordnet ist.

3. Sensorgesteuertes Nivelliergerät nach Anspruch 1 oder 2, **dadurch gekennzeichnet,** daß ferner benachbart zum Feinsensorbereich (A) in Axialrichtung jeweils ein Grobsensorbereich (B) vorgesehen ist, der jeweils in Umfangrichtung angeordnete teil- bis vollzylinderförmige Linsen (81) umfaßt, hinter denen zumindest jeweils eine Fotozelle (83) sitzt, und mit einer nachgeordneten Auswertelektronik zur entsprechenden Ansteuerung des zumindest einen Stellantriebes (79; 78, 80).

4. Sensorgesteuertes Nivelliergerät nach Anspruch 3, **dadurch gekennzeichnet,** daß hinter jeder Linse (81) jeweils nur eine Fotozelle (83) mit vergleichsweise geringer Längserstreckung bezogen auf die Linse (81) angeordnet ist.

5. Sensorgesteuertes Nivelliergerät nach Anspruch 3 oder 4, **dadurch gekennzeichnet,** daß die Linsen (81) jeweils parallel nebeneinander in mehreren Reihen so angeordnet sind, daß in axialer Draufsicht auf den Lasersensor (30) zumindest eine an nähernd geschlossene Polygonform gegeben ist.

6. Sensorgesteuertes Nivelliergerät nach einem der Ansprüche 3 bis 5, **dadurch gekennzeichnet,** daß die teil- bis vollzylinderförmigen sich längserstreckenden Linsen (81) parallel zur Sollebene (65) ausgerichtet und quer dazu nebeneinander liegend angeordnet sind.

7. Sensorgesteuertes Nivelliergerät nach einem der Ansprüche 3 bis 5, **dadurch gekennzeichnet,** daß die teil- bis vollzylinderförmigen sich längserstreckenden Linsen (81) quer zur Solleben (65) ausgerichtet und in Parallellage nebeneinander angeordnet sind.

8. Sensorgesteuertes Nivelliergerät nach einem der Ansprüche 3 bis 7, **dadurch gekennzeichnet,** daß zumindest der Grobsensorbereich (B) von einem Maschengitter (63) umgeben ist.

9. Sensorgesteuertes Nivelliergerät nach einem der Ansprüche 1 bis 8, **dadurch gekennzeichnet,** daß in der Sollebene (65) zwischen den beiden aufeinander zuweisenden Kegel- bzw. Polygonalprismen (67) ein Trennblatt (79) angeordnet ist.

10. Sensorgesteuertes Nivelliergerät nach einem der Ansprüche 1 bis 9, **dadurch gekennzeichnet,** daß die sich an die Kegel- bzw. Polygonalprismen (67) anschließenden Sammellinsen (71) in einem lichtundurchlässigen Gehäuse (87) untergebracht sind, wobei die Sammellinse (71) und das sie schirmende Gehäuse (87) in den Grobsensorbereich (B) ragt und hinter den dort vorgesehenen teil- bis vollzylinderförmigen Linsen (81) liegt.

11. Sensorgesteuertes Nivelliergerät nach einem der Ansprüche 1 bis 10 , bestehend aus einem Lagedetektor (2) mit einem Behälter (1), einer hierin befindlichen Flüssigkeit und einem darin angeordneten Schwimmer (5), sowie zwei damit zusammenwirkenden Kontaktpaaren (9, 11) zur Feststellung einer Lageveränderung des Schwimmers (5) und zur Betätigung eines nachgeordneten Stellantriebes (16) zur automatischen Nachführung und Ausrichtung auch des Lagedetektors (2), wobei die beiden Kontaktpaare (9, 11) vorzugsweise gegenüberliegend im jeweiligen Endbereich des Schwimmers (5) derart vorgesehen sind, daß jeweils ein Kontaktteil (9) eines jeden Kontaktpaares (9, 11) auf dem Schwimmer (5) und das jeweils andere Kontaktteil (11) gehäuseseitig abgestützt ist, **dadurch gekennzeichnet,** daß der Schwimmer (5) in seinem Mittenbereich über eine Mittelauflage (3) abgestützt und in Querrichtung zur jeweils vertikalen Verbindungsebene zwischen den beiden Kontaktpaaren (9, 11) drehbar gelagert ist, und daß jeweils eine Einstelleinrichtung vorgesehen ist, über die die jeweils einen Kontaktteile (11) zur Erzielung einer vorwählbaren geneigten Referenzfläche (17) in vorwählbarer Winkellage zur Horizontalen verstellbar sind.

12. Sensorgesteuertes Nivelliergerät nach Anspruch 11, **dadurch gekennzeichnet,** daß die Einstelleinrichtung einen um eine Achse (29; 29', 29") verschwenkbaren Einstellbalken (27) umfaßt, auf dem die jeweils einen Kontaktteile (11) mitverschwenkbar sitzen, die mit den jeweils anderen auf dem Schwimmer angeordneten Kontaktteilen (9) zusammenwirken.

13. Sensorgesteuertes Nivelliergerät nach Anspruch 11 oder 12, **dadurch gekennzeichnet,** daß zumindest vier kreuzweise zueinander angeordnete Kontaktpaare (9, 11) zur Lageerkennung des Schwimmers (5) vorgesehen sind, wobei die Einstelleinrichtung zur Winkeleinstellung zwei senkrecht zueinander stehende Achsen (29', 29") umfaßt, über die der Einstellbalken (27) mit den dort kreuzweise angeordneten Kontaktteilen (11) in einer vorwählbaren Winkellage gegenüber der Referenzebene (17) einstellbar ist.

14. Sensorgesteuertes Nivelliergerät nach einem der Ansprüche 11 bis 13, **dadurch gekennzeichnet,** daß die Mittelauflage (3) für den Schwimmer (5) aus einer den Schwimmer (5) haltenden Kippauflage bzw. Pendelachse bzw. Kugellagerung besteht.

15. Sensorgesteuertes Nivelliergerät nach einem der Ansprüche 11 bis 14, **dadurch gekennzeichnet,** daß entsprechend der Differenz zwischen der Schwer- und Auftriebskraft des Schwimmers (5) bei positiver Differenz der Schwerpunkt in oder unterhalb der den Schwimmer (5) unten abstützenden Mittelauflage (3) und bei negativer Differenz das Auftriebszentrum in oder oberhalb der den Schwimmer (5) von oben abstützenden Mittelauflage (3) angeordnet ist.

16. Sensorgesteuertes Nivelliergerät nach einem der Ansprüche 1 bis 10, **dadurch gekennzeichnet,** daß für den Fein- und/oder Grobsensorbereich (A, B) eine Referenz-Sollebenen-Abstandserkennungsschaltung vorgesehen ist, über deren Ausgangssignal der zumindest eine Stellmotor (79) in Abhängigkeit der Referenz-Sollebenen-Abstandsgröße schneller und/oder mit größeren Verstellweg gegensteuerbar ist.

17. Sensorgesteuertes Nivelliergerät nach Anspruch 16, **dadurch gekennzeichnet,** daß für den Feinsensorbereich (A) die Referenz-Sollebenen-Abstandserkennungsschaltung eine Intensitätsauswertschaltung (95) umfaßt, über die ein laserlichtintensitätsabhängiges Ausgangssignal zur Ansteuerung des zumindest einen Stellmotors (79) erzeugt wird, der bei zunehmendem Abstand des einfallenden Laserstrahles von der Kegel- oder Polygonprismaspitze und damit zunehmender, in das Kegel- bzw. Polygonprisma (67) einfallender Laserlichtintensität schneller und/oder mit größerem Verstellweg gegensteuerbar ist.

18. Sensorgesteuertes Nivelliergerät nach Anspruch 17, **dadurch gekennzeichnet,** daß die Intensitätsauswertschaltung (95) aus zumindest zwei, vorzugsweise am Kegel- bzw. Polygonprismaboden (91) sitzenden Fotozellen (73) besteht.

19. Sensorgesteuertes Nivelliergerät nach Anspruch 18, **dadurch gekennzeichnet,** daß die zumindest beiden und vorzugsweise mehreren Fotozellen (73) der Intensitätsauswertschaltung (95) zur Erzeugung eines laserlichtintensitätsabhängigen Ausgangssignals auf unterschiedlich einfallende Lichtintensitäten ansprechen.

20. Sensorgesteuertes Nivelliergerät nach einem der Ansprüche 16 bis 19, **dadurch gekennzeichnet,** daß für den Grobsensorbereich (B) die Referenz-Sollebene-Abstandserkennungsschaltung die hinter den parallel zur Sollebene (65) nebeneinander liegenden Sammellinsen (81) angeordnete Fotozellen (83) und eine Auswertschaltung (95') umfaßt, in der ein vom Referenz-Sollebenen-Abstand abhängiges Ausgangssignal zur Ansteuerung des zumindest einen Stellmotors (79) erzeugt wird, der bei zunehmendem Abstand des einfallenden Laserstrahles von der Sollebene (65) und damit einer Aktivierung einer von der Sollebene (65) entfernter liegenden Fotozelle (83) schneller und/oder mit größerem Verstellweg gegensteuerbar ist.

## Claims

1. A sensor controlled leveling instrument comprising a laser sensor (30) for detecting a desired plane in relation to a reference surface (R) predetermined by a laser beam, and an electronic processing system, via which at least one servo drive (79) which carries or co-sets the laser sensor (30), may be oppositely set in relation to a relative change in position of the laser sensor (30) in relation to the reference surface (R) for error correction to home on the reference surface (R), characterized in that the laser sensor (30) has a fine sensor range (A) with two cones or, respectively, polygonal prisms (67) which are arranged symmetrically in relation to the desired plane, taper towards each other and terminate directly adjacent to each other, on the bases of which cones or, respectively, polygonal prisms (67) a respective photoelectric cell (73) is at least indirectly mounted, and that the electronic processing system comprises a comparator circuit (77), via which, in the case of different intensities of the light incident at the two conical or polygonal prisms (67) the at least one servo-motor (79; 78; or 80) may be driven until the laser beam defining the reference signal plane (R) and to be received extends centrally between the two apices, which are directed towards each other, of the cones or, respectively, polygonal prisms (67).

2. The sensor controlled leveling instrument as claimed in claim 1, characterized in that on the base of the cones or, respectively, polygonal prisms (67) a respective collecting lens (77) in the form of a frustum of a cone or, respectively, a polygon, which tapers towards the rear, is mounted, on whose rear limiting surface a photoelectric cell (73) is arranged or, respectively, arranged following it.

3. The sensor controlled leveling instrument as claimed in claim 1 or in claim 2, characterized in that furthermore adjacent to the fine sensor range (A) in the axial direction a respective coarse sensor range (B) is provided, which comprises partly or completely cylindrical lenses (81), which are respectively arranged in the peripheral direction, behind which at least one respective photoelectric cell (83) is arranged, and with a following electronic processing system for the respective operation of the at least one servo drive (79', 78 and 80).

4. The sensor controlled leveling instrument as claimed in claim 3, characterized in that behind each lens (81) respectively solely one photo-electric cell (83) is arranged with a comparatively short longitudinal dimension in relation to the lens (81).

5. The sensor controlled leveling instrument as claimed in claim 3 or claim 4, characterized in that the lenses (81) are respectively arranged in parallel adjacent to each other in a plurality of rows so that as seen in an axial plan view looking towards the laser sensor (30) there is an at least substantially uninterrupted polygonal form.

6. The sensor controlled leveling instrument as claimed in any one of the claims 3 through 5, characterized in that the partly or completely cylindrical lenses (81) extending in the longitudinal direction are aligned parallel to the desired plane (65) and transversely thereto adjacent to each other.

7. The sensor controlled leveling instrument as claimed in any one of the claims 3 through 5, characterized in that the partly or completely cylindrical lenses (81) extending in the longitudinal direction are aligned transversely to the desired plane (65) and are arranged in a parallel setting adjacent to each other.

8. The sensor controlled leveling instrument as claimed in any one of the claims 3 through 7, characterized in that at least the coarse sensor range (B) is surrounded by mesh material (63).

9. The sensor controlled leveling instrument as claimed in any one of the claims 1 through 8, characterized in that in the desired plane (65) between the two conical or polygonal prisms (67) a separating sheet (79) is arranged.

10. The sensor controlled leveling instrument as claimed in any one of the claims 1 through 9, characterized in that the collecting lenses (71) adjacent to the two conical or polygonal prisms (67) are accommodated in an opaque housing (87), the collecting lens (71) and the housing (87) screening it extending into the coarse sensor range (B) and being arranged behind the partly or completely cylindrical lens (81) arranged here.

11. The sensor controlled leveling instrument as claimed in any one of the claims 1 through 10 consisting of a setting-responsive detector (2) with a container (1), a liquid present within the container and a float (5) arranged therein and furthermore two pairs (9 and 11) of contacts cooperating with it for detecting a change in the setting of the float (5) and for actuating a following servo drive (16) for automatic error correction and alignment of the setting detector (2) as well, the two pairs of contacts (9 and 11) preferably being so provided opposite each other in the respective terminal part of the float (5) that respectively one contact part (9) of each pair (9 and 11) of contacts bears on the (5) float and the respectively other contact part (11) bears on the housing, characterized in that in its center part the float (5) is supported by a center engagement means (3) and in the transverse direction is rotatably bearinged in relation to the respective vertical connecting plane between the two pairs (9 and 11) of contacts and in that respectively one adjustment device is provided, via which the respectively one contact parts (11) are able to be adjusted to produce a predeterminable sloping reference surface (17) at a predeterminable angular setting in relation to the horizontal.

12. The sensor controlled leveling instrument as claimed in claim 11, characterized in that the adjustment means comprises a setting beam (27), which is able to be pivoted about an axis (29, 29' and 29''), on which the one respective contact parts (11) are mounted so that they can be pivoted as well, which contact parts cooperate with the respectively one contact parts (9) mounted on the float.

13. The sensor controlled leveling instrument as claimed in claim 11 or claim 12, characterized in that at least four pairs (9 and 11) of contacts are provided to detect the setting of the float (5), the adjustment means for setting the angle comprising two mutually perpendicular shafts (29' and 29'') by means of which the setting beam can be set with the contact parts arranged thereon intersectingly in a predeterminable angular setting in relation to the reference plane (17).

14. The sensor controlled leveling instrument as claimed in any one of the claims 11 through 13, characterized in that the center engagement means (3) for the float (5) consists of a rocking means or pivot pin or, respectively, ball as a bearing means holding the float.

15. The sensor controlled leveling instrument as claimed in any one of the claims 11 through 13, characterized in that in accordance with the difference between the gravity and upthrust forces acting on the float (5) in the case of a positive difference the center of gravity is positioned in or underneath the center engagement means (3) supporting the float from below and in the case of a negative difference the center of gravity is positioned in or over the center engagement means (3) supporting the float from below.

16. The sensor controlled leveling instrument as claimed in any one of the claims 1 through 10, characterized in that for the fine and/or coarse sensor range (A and B) a reference plane-desired plane distance detector circuit is provided, by means of whose output signal the at least one servo-motor (79) is able to be operated oppositely in a manner dependent on the size of the distance between the reference plane and the desired plane more rapidly and/or with a larger movement.

17. The sensor controlled leveling instrument as claimed in claim 16, characterized in that for the fine sensor range (A) the reference plane-desired plane distance detector circuit comprises an intensity processing circuit (95) via which a laser light intensity-dependent output signal is produced for control of the at least one servo-motor (79), which on an increase in the distance of the incident laser beam from the conical or polygonal prism apices and hence an increasing laser light intensity incident at the conical or polygonal prisms (67) is able to be operated more rapidly and/or with a larger movement.

18. The sensor controlled leveling instrument as claimed in claim 17, characterized in that the intensity processing circuit (95) comprises at least two photoelectric cells (73) mounted preferably on the bottom (91) of the cone or, respectively, the polygon.

19. The sensor controlled leveling instrument as claimed in claim 18, characterized in that the at least two and preferably more photoelectric cells (73) of the intensity processing circuit (95) respond to differently incident light intensities for the production of a laser light intensity dependent output signal.

20. The sensor controlled leveling instrument as claimed in any one of the claims 16 through 19, characterized in that for the coarse sensor range (B) the reference plane-desired plane distance detector circuit comprises the photoelectric cells (83) arranged behind the collecting lenses adjacent to each other and parallel to the desired plane (65) and furthermore a processing circuit (95'), in which an output signal dependent on the reference plane-desired plane distance is produced for the operation of the at least one servo-motor (79), which on an increase in the distance of the incident laser light beam from the desired plane (65) and therefore an activation of a photoelectric cell (83), which is further removed from the desired plane (65) is moved more rapidly and/or with a larger movement.

## Revendications

1. Dispositif de nivellement commandé par un capteur, avec un capteur à laser (30) pour détecter le niveau de consigne par rapport à une surface de référence (R) prédéterminée par un rayon laser et avec une électronique d'évaluation par laquelle au moins une commande de réglage (29) portant ou réglant également le capteur à laser (30) peut être commandée pour compenser une modification de position relative du capteur à laser (30) par rapport à la surface de référence (R) au sens d'une restitution sur la surface de référence (R), caractérisé en ce que le capteur à laser (30) comprend une gamme de captage fin (A) avec deux cônes ou prismes polygonaux (67) à la base desquels se trouve chaque fois au moins indirectement une cellule photoélectrique (73) disposée symétriquement par rapport au plan de consigne (65), se terminant l'un vers l'autre à proximité immédiate et présentant des rétrécissements coniques tournée l'un vers l'autre et en ce que l'électronique d'évaluation comprend un circuit de comparateur (77) par lequel au moins un moteur de réglage (79, 78, 80) peut être commandé par la différence d'intensité de la lumière incidente dans les deux cônes ou prismes polygonaux (67) jusqu'à ce que le rayon laser définissant le plan de signal de référence (R) et à recevoir, passe au milieu entre les deux points, des cônes ou prismes polygonaux (67) tournés l'un vers l'autre.

2. Dispositif de nivellement commandé par capteur selon la revendication 1, caractérisé en ce que, à la base des cônes ou des prismes polygonaux (67) se trouve chaque fois une lentille collectrice (77) sous forme d'un tronc de cône ou de polygone se rétrécissant vers l'arrière et sur la face limitatrice postérieure de laquelle une cellule photoélectrique (73) est placée ou disposée.

3. Dispositif de nivellement commandé par capteur selon la revendication 1 ou 2, caractérisé en ce qu'un domaine de captage grossier (B) est prévu en outre à proximité du domaine de captage fin (A) en direction axiale, ledit domaine comprenant des lentilles en forme de cylindres complets ou de parties de cylindres (81) disposées dans la direction de la périphérie et derrière lesquelles se trouve au moins chaque fois une cellule photoélectrique (83) et avec une électronique d'évaluation disposée en aval pour commander de manière appropriée au moins une commande de réglage (79, 78, 80).

4. Dispositif de nivellement commandé par capteur selon la revendication 3 caractérisé en ce que, derrière chaque lentille (81) est disposée chaque fois seulement une cellule photoélectrique (83) dont l'extension longitudinale est relativement faible par rapport à la lentille (81).

5. Dispositif de nivellement commandé par capteur selon la revendication 3 ou 4, caractérisé en ce que les lentilles (81) sont disposées chacune parallèlement à côté les unes des autres en plusieurs rangées que, en vue axiale par le dessus sur le capteur à laser (30), il existe au moins une forme approximativement en polygone fermé.

6. Dispositif de nivellement commandé par capteur selon l'une des revendications 3 à 5, caractérisé en ce que les lentilles (81) s'étendant longitudinalement et en forme de cylindres complets ou partiels sont orientées parallèlement au plan de consigne (65) et sont disposées transversalement par rapport à celui-ci et les unes à côté des autres.

7. Dispositif de nivellement commandé par capteur selon l'une des revendications 3 à 5, caractérisé en ce que les lentilles (81) s'étendant longitudinalement et en forme de cylindres partiels ou complets sont orientées transversalement par rapport au plan de consigne (65) et sont disposées en position parallèle les unes à côté des autres.

8. Dispositif de nivellement commandé par capteur selon l'une des revendications 3 à 7, caractérisé en ce qu'au moins le domaine de captage grossier (B) est entouré par un treillis à mailles (63).

9. Dispositif de nivellement commandé par capteur selon l'une des revendications 1 à 8, caractérisé en ce que dans le plan de consigne (65) est disposée une feuille séparatrice (79) entre les deux cônes ou prismes polygonaux (67) tournés l'un vers l'autre.

10. Dispositif de nivellement commandé par capteur selon l'une des revendications 1 à 9, caractérisé en ce que les lentilles collectrices (71) se raccordant aux cônes ou aux prismes polygonaux (67) sont disposées dans un boîtier (87) ne laissant pas passer la lumière, tandis que la lentille collectrice (71) et le boîtier (87) qui la protège pénètrent dans le domaine de captage grossier (B) et sont situés derrière les lentilles (81) en forme de cylindre complet ou partiel et prévu à cet endroit.

11. Dispositif de nivellement commandé par capteur selon l'une des revendications 1 à 10, constitué d'un détecteur de position (2) avec un récipient (1), un liquide se trouvant dans celui-ci et un flotteur (5) disposé dans celui-ci ainsi que deux paires de contacts (9, 11) coopérant avec celui-ci pour déterminer une modification de position du flotteur (5) et pour actionner une commande de réglage (16) montée en aval pour restituer automatiquement et orienter également le détecteur de position (2), tandis que les deux paires de contact (9, 11) sont prévues de préférence opposées l'une à l'autre dans chaque zone terminale du flotteur (5), qu'une pièce de contact (9) de l'une des paires de contact (9, 11) est supportée sur le flotteur (5) et que l'autre pièce de contact (11) est supportée par le boîtier, caractérisé en ce que le flotteur (5) est supporté dans sa zone centrale par un support central (3) et est monté à pivot entre les deux paires de contact (9, 11) en direction transversale par rapport au plan de jonction vertical et qu'un dispositif de réglage est prévu dans chaque cas pour permettre le réglage de chacune des pièces de contact (11) pour obtenir une surface de référence (17) à inclinaison prédéterminable, avec l'angle d'inclinaison par rapport à l'horizontale qui peut être choisi à l'avance.

12. Dispositif de nivellement commandé par capteur selon la revendication 11, caractérisé en ce que le dispositif de réglage comprend une barre de réglage (27) pouvant pivoter autour d'un axe (29, 29', 29") sur laquelle est placée chaque fois une pièce de contact (11) pouvant pivoter avec cet axe et coopérant avec l'autre pièce de contact (9) disposée sur le flotteur.

13. Dispositif de nivellement commandé par capteur selon la revendication 11 ou 12, caractérisé en ce qu'il est prévu au moins 4 paires de contacts (9, 11) disposées en croix les unes par rapport aux autres pour déterminer la position du flotteur (5), tandis que le dispositif de réglage pour régler l'angle d'inclinaison comprend deux axes (29',29") disposés perpendiculairement l'un à l'autre et par lequel la barre de réglage (27) avec les pièces de contact (11) disposées à cet endroit en forme de croix peut être réglée suivant un angle d'inclinaison prédéterminable par rapport au plan de référence.

14. Dispositif de nivellement commandé par capteur selon l'une des revendications 11 à 13, caractérisé en ce que le support central (3) pour le flotteur (5) est constitué d'un support basculant maintenant le flotteur (5) ou d'un axe oscillant ou d'un palier à billes

15. Dispositif de nivellement commandé par capteur selon l'une des revendications 11 à 14, caractérisé en ce que, en fonction de la différence entre la force de pesanteur et de flottaison du flotteur (5), en cas de différence positive, le centre de gravité est situé dans ou en dessous du support central (3) soutenant le flotteur (5) par le dessous et, en cas de différence négative, le centre de poussée est situé dans ou au-dessus du support central (3) soutenant le flotteur (5) par le dessus.

16. Dispositif de nivellement commandé par capteur selon l'une des revendications 11 à 10, caractérisé en ce que, pour le domaine de captage fin et/ou grossier (A, B), il est prévu un circuit de détermination de la distance du plan de consigne de référence dont le signal de sortie peut servir à commander au moins un moteur de réglage (79) en fonction de la grandeur de la distance du plan de consigne de référence, plus rapidement et/ou avec un parcours de réglage plus grand.

17. Dispositif de nivellement commandé par capteur selon la revendication 16, caractérisé en ce que, pour le domaine de captage fin (A), le circuit de détermination de la distance du plan de consigne de référence comprend un circuit d'évaluation de l'intensité (95) par lequel un signal de sortie dépendant de l'intensité lumineuse du laser est créé pour commander au moins un moteur de réglage (79), ce moteur pouvant être commandé en cas de distance croissante du rayon laser incident par rapport à la pointe du cône ou du prisme polygonal et avec une intensité croissante de la lumière de laser incidente sur le cône ou le prisme polygonal, (77) plus rapidement et/ou avec un trajet de réglage plus grand.

18. Dispositif de nivellement commandé par capteur selon la revendication 17, caractérisé en ce que le circuit d'évaluation de la densité (95) est constitué d'au moins deux cellules photoélectriques (73) disposées de préférence sur la base du cône ou du prisme polygonal (91).

19. Dispositif de nivellement commandé par capteur selon la revendication 18, caractérisé en ce que les deux cellules photoélectriques (73), et de préférence les cellules photoélectriques plus nombreuses du circuit d'évaluation de la densité (59), réagissent à des intensités différentes de la lumière incidente pour produire un signal de sortie dépendant de l'intensité de la lumière du laser.

20. Dispositif de nivellement commandé par capteur selon l'une des revendications 16 à 19, caractérisé en ce que, pour le domaine de captage grossier (B), le dispositif de reconnaissance de distance du plan de consigne de référence comprend les cellules photoélectriques (83) disposées derrière les lentilles collectrices (81) placées les unes à côté des autres et parallèlement au plan de consigne (65) et un circuit d'évaluation (59') dans lequel un signal de sortie dépendant de la distance du plan de consigne de référence est créé pour commander au moins un moteur de réglage (79) qui peut être commandé en cas de distance croissante du rayon laser incident par rapport au plan de consigne (65) et donc une activation d'une cellule photoélectrique (83) disposée à une plus grande distance du plan de référence (65) plus rapidement et/ou avec un trajet de réglage plus grand.
